# EUROPÄISCHE PATENTSCHRIFT

(11) **EP 2 138 727 B1**
(45) Veröffentlichungstag und Bekanntmachung des Hinweises auf die Patenterteilung: **02.01.2019**
(21) Anmeldenummer: 09005839.7
(22) Anmeldetag: 27.04.2009
(51) Int. Cl.: F01D 5/22, F01D 11/00, F02C 6/08, F04D 27/02, F04D 29/54, F04D 29/68

(54) **Schaufeldeckband mit Durchlass**
Blade shrouds with outlet
Bande de recouvrement d'aube dotée d'un passage

(30) Priorität: 23.06.2008 DE 102008029605
(43) Veröffentlichungstag der Anmeldung: 30.12.2009
(73) Patentinhaber: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Hoefer & Partner Patentanwälte mbB

(56) Entgegenhaltungen:
- EP-A2- 1 536 146
- GB-A- 504 214
- US-A- 4 534 701
- US-A- 4 642 023

## Beschreibung

Die Erfindung bezieht sich auf eine Strömungsarbeitsmaschine gemäß den Merkmalen des Oberbegriffs des Anspruchs 1.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Eine Quelle der in Strömungsarbeitsmaschinen entstehenden Verluste besteht in der Leckageströmung um Schaufeldeckbänder, wie sie häufig am inneren Schaufelende von Statoren oder auch am äußeren Schaufelende von Rotoren zu finden sind. Die Leckageströmung wird üblicherweise durch Dichtspitzen, die innerhalb der Deckbandkavität angeordnet sind, klein gehalten. Die Leckageströmung kann dennoch, insbesondere in sehr hoch belasteten Schaufelreihen, die durch einen hohen statischen Druckanstieg und somit einen hohen Antrieb für die Leckageströmung gekennzeichnet sind, zu starker Strömungsablösung führen und so sehr schädliche Auswirkungen auf das Leistungsverhalten der Strömungsarbeitsmaschine (SAM) haben.

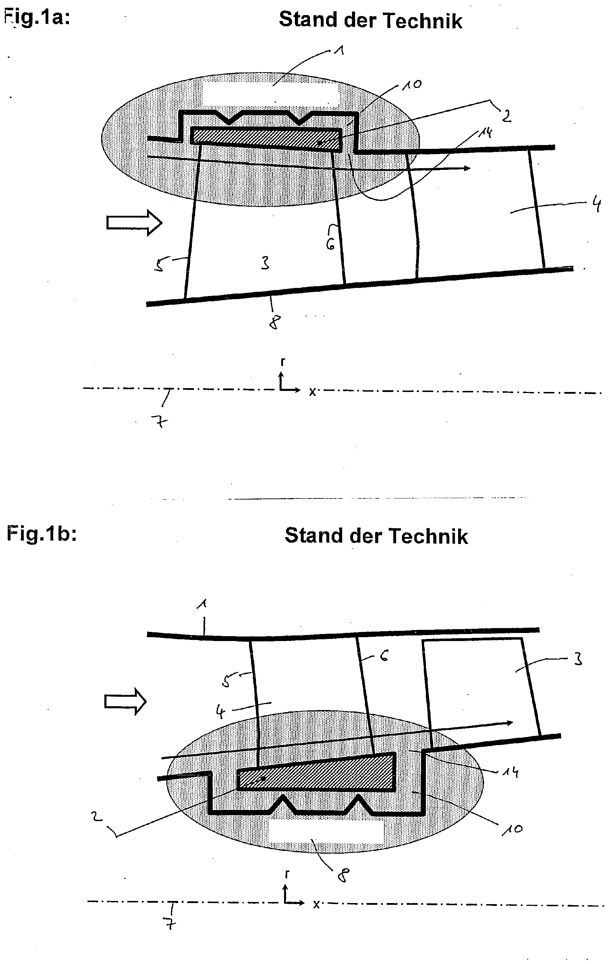

Die Fig.1a zeigt schematisch den Abschnitt einer Strömungsarbeitsmaschine, bestehend aus einer Rotorschaufelreihe 3 und einer Statorschaufelreihe 4. Besonders hervorgehoben ist die Deckbandanordnung am äußeren Schaufelende des Rotors 3. Nach dem Stand der Technik besteht diese Deckbandanordnung aus einer großen Kavität 10, die im Gehäuse 1 vorgesehen ist und in die das Deckband 2 zur Schaffung einer möglichst glatten äußeren Begrenzung des Hauptströmungspfades vollständig eingebettet ist.

Die Fig.1b zeigt ebenfalls den Abschnitt einer Strömungsarbeitsmaschine, hier bestehend aus einer festen Statorschaufelreihe 4 und einer Rotorschaufelreihe 3. Besonders hervorgehoben ist die Deckbandanordnung am inneren Schaufelende des festen Stators 4. Nach dem Stand der Technik besteht diese Deckbandanordnung aus einer großen Kavität 10, die in der Nabe 8 vorgesehen ist und in die das Deckband 2 zur Schaffung einer möglichst glatten inneren Begrenzung des Hauptströmungspfades vollständig eingebettet ist.

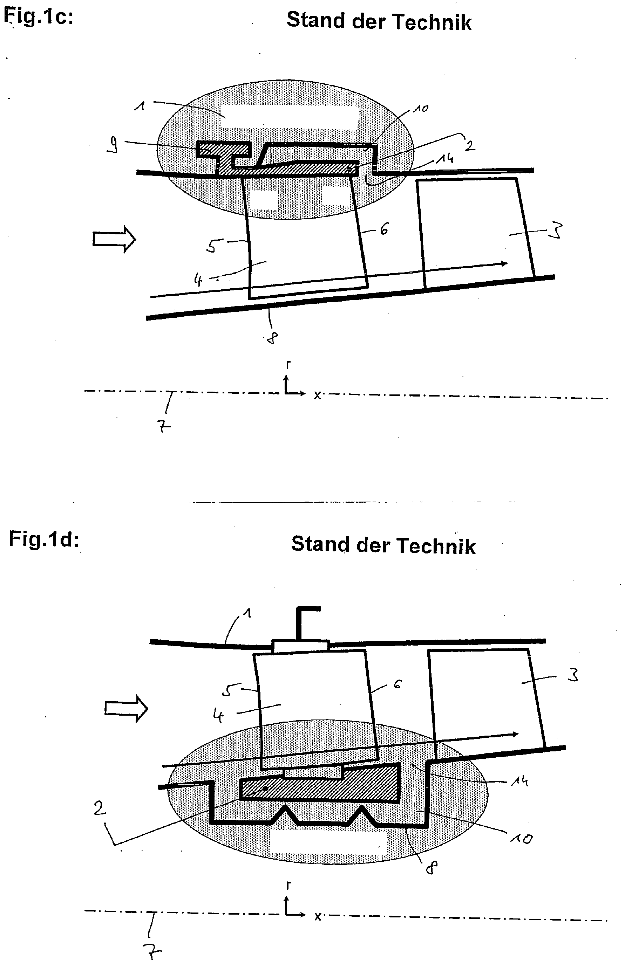

Die Fig.1c zeigt wiederum schematisch den Abschnitt einer Strömungsarbeitsmaschine, nun bestehend aus einer Rotorschaufelreihe 3 und einer festen Statorschaufelreihe 4 mit radialem Laufspalt an der Nabe 8. Besonders hervorgehoben ist die Deckbandanordnung am äußeren Schaufelende des Stators 4. Nach dem Stand der Technik besteht eine solche Deckbandanordnung aus einem in der Nähe der Schaufelvorderkante 5 im Gehäuse 1 befestigten Statorschaufelfuß 9 und einer den stromab befindlichen Teil des Schaufelfußes 9 umgebenden großen Kavität 10, die im Gehäuse 1 vorgesehen ist und stromab der Schaufelhinterkante 6 mit dem Hauptströmungspfad in Verbindung steht. Zur Schaffung einer möglichst glatten äußeren Begrenzung des Hauptströmungspfades nimmt das Gehäuse 1 das Deckband 2 vollständig in sich auf.

Die Fig.1d zeigt schematisch den Abschnitt einer Strömungsarbeitsmaschine, bestehend aus einer Reihe verstellbarer variabler Statoren 4 und einer Rotorschaufelreihe 3. Besonders hervorgehoben ist die Deckbandanordnung am inneren Schaufelende des Verstellstators 4. Nach dem Stand der Technik besteht die Deckbandanordnung auch hier aus einer großen Kavität 10, die in der Nabe 8 vorgesehen ist und in die das Deckband 2 zur Schaffung einer möglichst glatten inneren Hauptströmungspfadbegrenzung vollständig eingebettet ist.

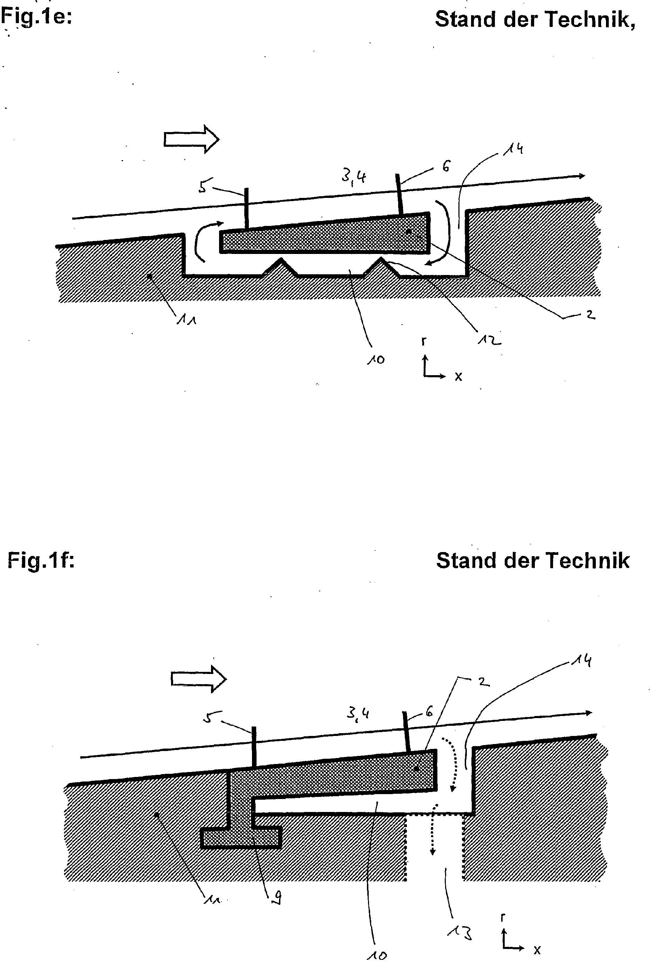

Die Fig.1e zeigt, stellvertretend für Deckbänder 2 von verstellbaren oder festen Rotoren 3 und Statoren 4, eine Anordnung aus Bauteilen am Rand des Hauptströmungspfades einer Strömungsarbeitsmaschine, bestehend aus einer Schaufelreihe mit Deckband 2 sowie einer weiteren baulichen Struktur 11, die das besagte Schaufeldeckband 2 umgibt und relativ zum Deckband 2 eine Bewegung in Umfangsrichtung der Strömungsarbeitsmaschine ausführt. Aus diesem Grund befindet sich zwischen dem Deckband 2 und der das Deckband 2 umgebenden baulichen Struktur 11 eine Kavität 10, in der zur Minderung des Leckagestroms Dichtungsmittel 12 vorgesehen sind, die üblicherweise an der dem Hauptströmungspfad abgewandten Seite des Deckbandes 2 angeordnet sind. Der dicke Pfeil zeigt die von links nach rechts durch die Schaufelreihe 3, 4 verlaufende Hauptströmung an, der dünne lange Pfeil deutet den Strömungsverlauf am Rand des Hauptströmungspfades an. Es kann sich bei der hier dargestellten Anordnung sowohl um eine Region am Gehäuse 1 als auch um eine Region an der Nabe 8 einer Strömungsarbeitsmaschine handeln. Das Deckband 2 kann massiv oder auch (wie hier nicht gezeigt) hohl gestaltet sein und besteht aus einem oder mehreren Bauteilen. Die zwischen dem Deckband 2 und der umgebenden baulichen Struktur 11 auftretende Leckageströmung (kleine Pfeile), die entgegen der Hauptströmungsrichtung (dicker Pfeil) verläuft, wird in der hier gezeigten Anordnung durch eine Anzahl von Dichtspitzen 12 gemindert. Die Dichtspitzen 12 können am umgebenden Bauteil oder auch (wie hier nicht dargestellt) am Deckband selbst angeordnet sein. Genauso gut könnte aber auch eine Labyrinthanordnung als Dichtmittel 12 Verwendung finden. Im Bereich des Deckbandes 2 sind die Vorderkante (VK) 5 und Hinterkante (HK) 6 der betrachteten Schaufelreihe 3, 4 angedeutet. Dem hier dargestellten Stand der Technik entsprechend steht die das Schaufeldeckband umgebende Kavität 10 an genau zwei Orten mit dem Hauptströmungspfad in Verbindung, nämlich durch einen Ringspalt direkt stromauf des Deckbandes 2 und direkt stromab des Deckbandes 2.

Die Fig.1f zeigt, stellvertretend für Deckbänder von verstellbaren oder festen Rotoren 3 und Statoren 4, eine Anordnung aus Bauteilen am Rand des Hauptströmungspfades einer Strömungsarbeitsmaschine, bestehend aus einer Schaufelreihe 3, 4 mit Deckband 2 sowie einer baulichen Struktur 11, die das besagte Schaufeldeckband 2 umgibt und mit der das Schaufeldeckband 2 lokal verbunden ist. Diese Anordnung wird insbesondere dann gewählt, wenn stromab der betreffenden Schaufelreihe 3, 4 durch eine Kammer 13 Fluid vom Hauptströmungspfad abgeführt werden soll (z.B. Abblasung von Luft in Kompressoren). Das Schaufeldeckband 2 bildet gleichzeitig den Schaufelfuß 9. Auf diese Weise ergibt sich eine Kavität 10, die das Deckband 2 nur teilweise umgibt. Der dicke Pfeil zeigt die von links nach rechts durch die Schaufelreihe 3, 4 verlaufende Hauptströmung an, der dünne lange Pfeil deutet den Strömungsverlauf am Rand des Hauptströmungspfades an. Es kann sich bei der hier dargestellten Anordnung sowohl um eine Region am Gehäuse 1 als auch um eine Region an der Nabe 8 einer Strömungsarbeitsmaschine handeln. Das Deckband 2 kann massiv oder auch (wie hier nicht gezeigt) hohl gestaltet sein und besteht aus einem oder mehreren Bauteilen. Für den Fall der Abführung von Fluid vom Hauptströmungspfad (kleine Pfeile), wird die Kavität 10 durchströmt. Im Bereich des Deckbandes 2 sind die Vorderkante (VK) 5 und Hinterkante (HK) 6 der betrachteten Schaufelreihe angedeutet. Dem Stand der Technik entsprechend steht die das Deckband 2 umgebende Kavität 10 nur direkt stromab des Schaufeldeckbandes 2 durch einen Ringspalt 14 mit dem Hauptströmungspfad in Verbindung.

Als nachteilig erweist es sich, dass es an den Oberflächen aerodynamisch hochbelasteter Schaufelreihen mit Deckband aufgrund der Grenzschichtaufdickung zur Entstehung von hohen Totaldruckverlusten, sowohl am Schaufelprofil als auch am Strömungspfadrand (äußere/innere Ringkanalwände) kommt. Dies ist insbesondere dann der Fall, wenn zudem auch ein Leckagestrom auftritt, der niederenergetisches Fluid vor der Schaufelreihe einströmen lässt. Die Folge sind schlechte Betriebskennwerte im Hinblick auf den Wirkungsgrad, die Stabilität und die Weite des Betriebsbereichs der Strömungsarbeitsmaschine.

Die US 4 642 023 A beschreibt eine Strömungsarbeitsmaschine, bei welcher die Schaufeln von einem mit den radial äußeren Schaufelenden verbundenen zylindrischen Deckband umgeben sind. Zwischen der Hauptströmungskanalwandung und dem Deckband ist im Abströmbereich des Deckbandes eine Labyrinthdichtung angeordnet, die den Ringraum zwischen dem Deckband und der dieses umgebenden Wandung abdichten soll. Die sich in der Labyrinthdichtung ergebende Leckageströmung wird durch Entlüftungslöcher in den Bereich der Schaufeln geleitet. Weiterhin ist aus der US 4 534 701 A und der EP 1 536 146 A2 eine Strömungsarbeitsmaschine bekannt, bei der ein Deckband in einer ringförmigen Kavität angeordnet ist.

Der Erfindung liegt die Aufgabe zugrunde, eine Strömungsarbeitsmaschine der genannten Art zu schaffen, welche bei einfachem Aufbau und einfacher, kostengünstiger Herstellbarkeit einen hohen Wirkungsgrad aufweist und sich durch optimierte Strömungsverhältnisse auszeichnet.

Erfindungsgemäß wird die Aufgabe durch die Merkmalskombination des Anspruchs 1 gelöst, die Unteransprüche zeigen weitere vorteilhafte Ausgestaltungen der Erfindung.

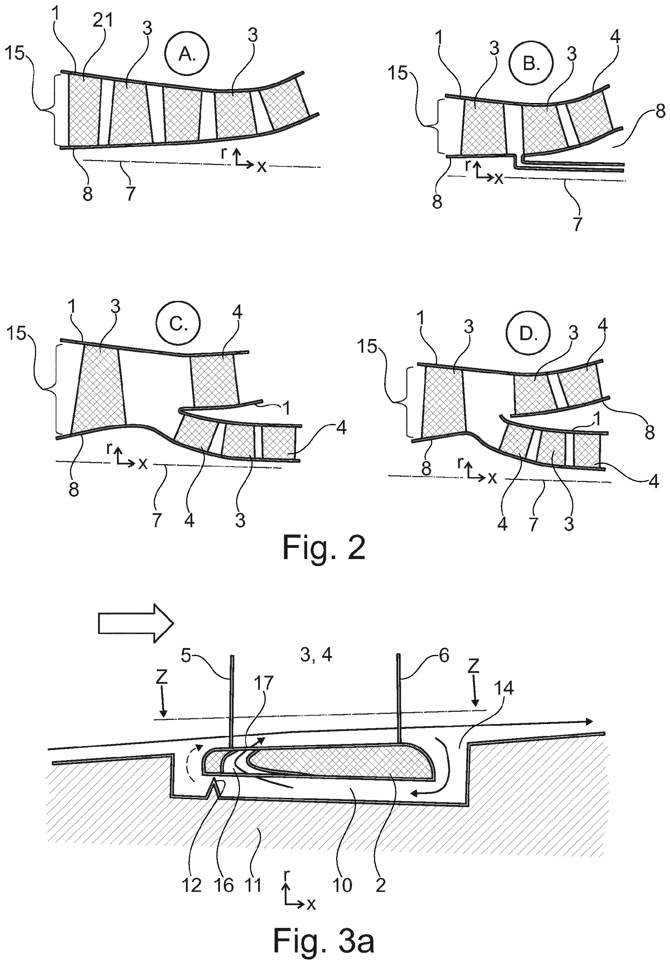

Die vorliegende Erfindung bezieht sich somit auf Schaufelreihen von Strömungsarbeitsmaschinen wie Bläser, Verdichter, Pumpen und Ventilatoren axialer, halbaxialer oder auch radialer Bauart mit gasförmigem oder flüssigem Arbeitsmedium. Die Strömungsarbeitsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl
feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben. Die Maschine kann auch einen Stator vor dem ersten Rotor, ein sogenanntes Vorleitrad, aufweisen. Mindestens ein Stator oder Vorleitrad kann - abweichend von der unbeweglichen Fixierung - drehbar gelagert sein, um den Anstellwinkel zu verändern. Eine Verstellung erfolgt beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren. Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Fig. 2 zeigt beispielhaft vier mögliche Konfigurationen der Strömungsarbeitsmaschine.

Im einzelnen umfasst die vorliegende Erfindung die Gestaltung eines Deckbandes der Schaufelreihe einer Strömungsarbeitsmaschine, derart, dass im Schaufeldeckband an wenigstens einem Ort des Umfangs ein Sekundärströmungsweg vorgesehen ist, der das Deckband gänzlich durchdringt und auf diese Weise eine zusätzliche Verbindung zum Hauptströmungspfad schafft, derart, dass Fluid aus einer Zone im Bereich der Deckbandkavität durch das Deckband hindurch zu einem Ort an der Schaufel- und/oder hauptströmungsseitigen Deckbandoberfläche gelangt.

Erfindungsgemäß ist für den Einsatz in einer Strömungsarbeitsmaschine eine Schaufeldeckbandanordnung geschaffen, die mit Hilfe eines speziellen Durchlasses den Verlauf der Strömung im Hauptströmungspfad zusätzlich beeinflusst und auf diese Weise die Leistungswerte der betreffenden Schaufelreihe steigert.

Im Folgenden wird die Erfindung anhand von Ausführungsbeispielen in Verbindung mit den Figuren beschrieben. Dabei zeigt:
- Fig.1a:: Schaufel nach dem Stand der Technik, Rotor
- Fig.1b:: Schaufel nach dem Stand der Technik, fester Stator mit Innendeckband
- Fig.1c:: Schaufel nach dem Stand der Technik, fester Stator mit Außendeckband
- Fig.1d:: Schaufel nach dem Stand der Technik, Verstellstator
- Fig.1e:: Schaufeldeckbandkonfiguration, Stand der Technik, mit Relativbewegung zwischen Schaufeldeckband und umgebender baulicher Struktur
- Fig.1f:: Schaufeldeckbandkonfiguration, Stand der Technik, mit Befestigung am umgebenden Bauteil
- Fig.2:: mögliche Konfigurationen erfindungsrelevanter Strömungsarbeitsmaschinen
- Fig.3a:: Erfindungsgemäßes Schaufeldeckband mit Durchlass, rechteckartige Konfiguration, mit Relativbewegung, Meridianansicht
- Fig.3b:: Erfindungsgemäße Schaufeldeckbänder mit Durchlass, rechteckartige Konfigurationen, mit Relativbewegung, Meridianansicht
- Fig.3c:: Erfindungsgemäße Zufuhrzone am Hauptströmungspfad, Ansicht Z-Z
- Fig.3d:: Erfindungsgemäßes Schaufeldeckband mit Durchlass, flache Konfiguration, mit Relativbewegung, Ansicht Z-Z
- Fig.3e:: Erfindungsgemäßes Schaufeldeckband mit Durchlass, flache Konfiguration, mit Befestigung an umgebender baulicher Struktur, Meridianansicht
- Fig.3f:: Erfindungsgemäßes Schaufeldeckband mit Durchlass, flache Konfiguration, mit Befestigung an umgebender baulicher Struktur, Ansicht Z-Z
- Fig.4a:: Erfindungsgemäßes Schaufeldeckband mit Durchlass, abgestufte Konfiguration, mit Relativbewegung, Meridianansicht
- Fig.4b:: Erfindungsgemäßes Schaufeldeckband mit Durchlass, abgestufte Konfiguration, mit Relativbewegung, mit axialem Umlenkmittel/Impeller, Meridianansicht
- Fig.4c:: Erfindungsgemäßes Schaufeldeckband mit Durchlass, abgestufte Konfiguration, mit Relativbewegung, mit gekrümmtem Umlenkmittel/Impeller, Meridianansicht
- Fig.4d:: Erfindungsgemäßes Schaufeldeckband mit Durchlass, abgestufte Konfiguration, mit Relativbewegung, Umlenkmittel/Impeller als separates Bauteil, Meridianansicht
- Fig.4e:: Erfindungsgemäßes Schaufeldeckband mit Durchlass, abgestufte Konfiguration, mit Relativbewegung, mit Umlenkmittel/Impeller, Ansicht Z-Z
- Fig.5a:: Erfindungsgemäßes Schaufeldeckband mit Durchlass zum Hauptströmungspfad und zur hohlen Schaufel, mit Relativbewegung, Meridianansicht
- Fig.5b:: Erfindungsgemäßes Schaufeldeckband mit Durchlass zum Hauptströmungspfad und zur hohlen Schaufel, mit Relativbewegung, Ansicht Z-Z
- Fig.5c:: Erfindungsgemäßes Schaufeldeckband mit Durchlass zum Hauptströmungspfad und zur hohlen Schaufel, mit Relativbewegung, mit Umlenkmittel/Impeller, Meridianansicht
- Fig.6a:: Erfindungsgemäßes Schaufeldeckband mit Durchlass an der Zuströmseite, mit Relativbewegung, Meridianansicht
- Fig.6b:: Erfindungsgemäßes Schaufeldeckband mit Durchlass an der Zuströmseite, mit Relativbewegung, Ansicht Z-Z

Das Deckband einer Schaufelreihe wird in vorliegender Erfindung grundsätzlich dadurch charakterisiert, dass es bei Betrachtung in Meridianströmungsrichtung der Strömungsarbeitsmaschine wenigstens im Hinterkantenbereich der meridionalen Erstreckung der Schaufel entlang des Hauptströmungspfadrandes am gesamten Umfang keinen Kontakt zu einem das Deckband umgebenden Bauteil gibt. Die dabei geformte Umfangskavität um das Deckband besitzt wenigstens an der stromab gelegenen Begrenzung des Deckbandes eine ringspaltartige Verbindung zum Hauptströmungspfad.

Bei einer konventionellen Deckbandkonfiguration nach dem Stand der Technik, bei der das Deckband und die das Deckband umgebende bauliche Struktur eine rotierende Relativbewegung zueinander ausführen, steht die das Schaufeldeckband umgebende Kavität an genau zweien und in Meridianströmungsrichtung hintereinander gelegenen Orten mit dem Hauptströmungspfad in Verbindung, nämlich durch je einen Ringspalt direkt stromauf des Deckbandes und direkt stromab des Deckbandes, siehe Fig.1e.

Bei einer anderen möglichen Form einer konventionellen Deckbandkonfiguration nach dem Stand der Technik, bei der das Deckband und die das Deckband umgebende bauliche Struktur mit einander verbunden sind, steht die das Schaufeldeckband umgebende Kavität in Meridianströmungsrichtung betrachtet an genau einem Ort mit dem Hauptströmungspfad in Verbindung, nämlich durch einen Ringspalt direkt stromab des Deckbandes, siehe Fig.1f.

Zweck der erfindungsgemäßen Lösung ist es, die Ringkavität um das Deckband als Versorgungsquelle für eine zusätzliche lokale Fluidzufuhr an den Rand- und/oder Schaufeloberflächen der betreffenden Schaufelreihe zu nutzen.

Erfindungsgemäße Deckbandkonfigurationen sind in Fig.3a bis Fig.6b dargestellt. Entscheidend für die vorliegende Erfindung ist die konzeptionelle Anordnung des Deckbandes mit einem an der Deckbandkavität beginnenden Sekundärströmungsweg, der in seinem weiteren Verlauf das Deckband gänzlich durchdringt. Die genaue Gestalt der Deckbandquerschnittsform sowie die genaue geometrische Gestaltung der Begrenzungen der Deckbandkavität kann erfindungsgemäß den jeweiligen Gegebenheiten angepasst werden. Die genannten nicht erfindungsrelevanten Merkmale sind hier zum Zwecke der Übersichtlichkeit nur soweit in vereinfachter Form skizziert, wie dies für die Darstellung und das Verstehen relevanter Zusammenhänge der Erfindung notwendig ist.

Die Fig.3a bis Fig.3e zeigen beispielhaft einige erfindungsgemäße Deckbandkonfigurationen 2 mit Durchlass 16. Die Darstellung ist auf den Bereich in der Nähe der Berandung des Hauptströmungspfades beschränkt. Die Anordnung umfasst eine Schaufelreihe 3, 4, deren äußeres Ende bis an den Hauptströmungspfadrand reicht, der an dieser Stelle durch das Deckband 2 gebildet wird, das mit den Schaufeln 3, 4 der Schaufelreihe verbunden ist. Das Deckband 2 ist von einer baulichen Struktur 11 derart umgeben, dass sich um das Deckband 2 wenigstens in einem Teil seiner Erstreckung eine mit dem Hauptströmungspfad in Verbindung stehende Kavität 10 ausgebildet ist. Stromauf und/oder stromab der Schaufelreihe 3, 4 mit Deckband 2 können sich weitere Schaufelreihen befinden, die hier aber der Einfachheit halber nicht mit dargestellt sind. Das Deckband 2 beginnt in der Nähe und stromauf der Schaufelvorderkante 5 und endet in der Nähe und stromab der Schaufelhinterkante 6.

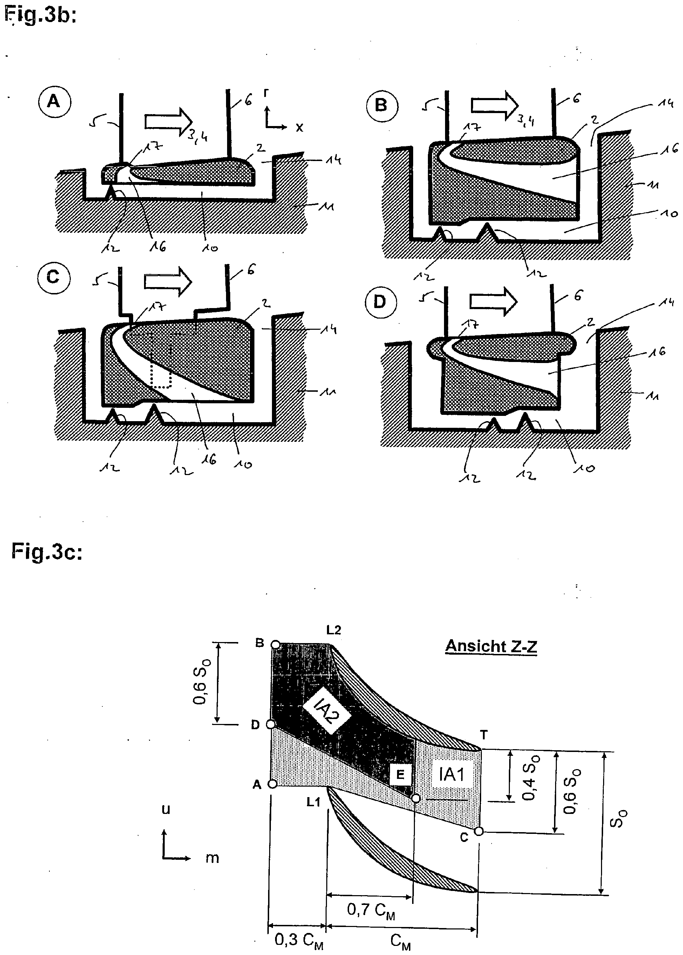

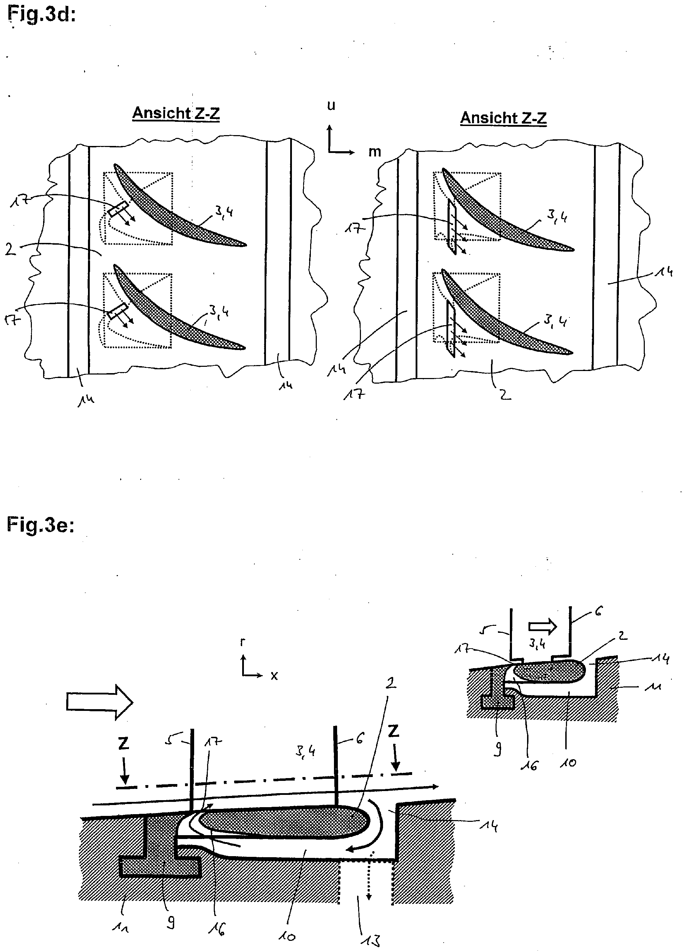

Die Fig. 3a zeigt die erfindungsgemäße Anordnung einer Schaufelreihe mit Deckband 2 in der durch die Axialrichtung x und die Radialrichtung r aufgespannten Meridianebene. Das Deckband 2 ist hier als flacher, nicht abgestufter, im Wesentlichen mit rechteckartigem Querschnitt versehener Ringkörper gegeben, zu dem die umgebende bauliche Struktur 11 eine rotierende Relativbewegung ausführt. Zur Leckageabdichtung ist hier beispielhaft eine von der umgebenden baulichen Struktur 11 ausgehende Dichtspitze 12 vorgesehen, die einen minimalen Laufspalt zum Deckband 2 lässt oder während des Betriebes der Strömungsarbeitsmaschine auch zeitweise Kontakt zur hauptströmungspfadabgewandten Seite des Deckbandes 2 gegebenenfalls mit einem hier nicht dargestellten Anstreifbelag hat. Erfindungsgemäß ist im Deckband 2 ein Sekundärströmungsweg 16 vorgesehen, der das Deckband 2 durchdringt und in Hauptströmungsrichtung (dicker Pfeil von links nach rechts) gesehen stromab des Dichtmittels 12 angeordnet ist. Auf diese Weise kann, ohne dass die Dichtwirkung beeinträchtigt wird, Fluid stromab des Deckbandes 2 in die Deckbandkavität 10 eintreten und durch den Sekundärströmungsweg 16, der hier als düsenartiger gekrümmter Durchlass 16 ausgeformt ist, auf die hauptströmungspfadzugewandte Seite des Deckbandes 2 ausströmen (Ausströmöffnung 17), um die Randströmung dort zu energetisieren. Die eingezeichnete Ansicht Z-Z zeigt in den Figuren 3c und 3d weitere Merkmale der Erfindung.

Die Fig. 3b zeigt weitere erfindungsgemäß mögliche Varianten von Schaufeldeckbandkonfigurationen mit Durchlass 16 in der Meridianansicht.

Der Bildteil A zeigt eine Variante mit fester Verbindung zwischen Schaufelreihe 3, 4 und Deckband 2, bei der der Sekundärströmungsweg 16 in einem flachen Deckband 2 vorgesehen ist und einen düsenartigen gekrümmten kurzen Durchlass 16 bildet. Der Durchlass 16 beginnt auf der hauptströmungspfadabgewandten Seite des Deckbandes 2 und endet auf der hauptströmungspfadzugewandten Seite des Deckbandes 2 mit einer in die Hauptströmung vorstehenden Öffnung 17.

Der Bildteil B zeigt eine Variante mit fester Verbindung zwischen Schaufelreihe 3, 4 und Deckband 2, bei der der Sekundärströmungsweg 16 in einem tiefen Deckband 2 vorgesehen ist und einen düsenartigen gekrümmten langen Durchlass 16 bildet. Der Durchlass 16 beginnt auf der Abströmseite des Deckbandes 2 und endet auf der hauptströmungspfadzugewandten Seite des Deckbandes 2 mit einer konturfluchtenden Öffnung 17.

Der Bildteil C zeigt eine Variante mit innerhalb des Deckbandes 2 drehbaren Verstellschaufeln 3, 4, bei der der Sekundärströmungsweg 16 in einem tiefen Deckband 2 vorgesehen ist und einen düsenartigen gekrümmten langen Durchlass 16 bildet. Der Durchlass 16 beginnt auf der hauptströmungspfadabgewandten Seite des Deckbandes 2 und endet auf der hauptströmungspfadzugewandten Seite des Deckbandes 2 mit einer konturfluchtenden Öffnung 17.

Der Bildteil D zeigt eine Variante mit fester Verbindung zwischen Schaufelreihe 3, 4 und Deckband 2, bei der der Sekundärströmungsweg 16 in einem tiefen und taillierten Deckband 2 vorgesehen ist und einen düsenartigen gekrümmten langen Durchlass 16 bildet. Der Durchlass 16 beginnt auf der Abströmseite des Deckbandes 2 und endet auf der hauptströmungspfadzugewandten Seite des Deckbandes 2 mit einer konturfluchtenden Öffnung 17.

Die Fig. 3c zeigt den Bereich eines Schaufelendes in der Ansicht Z-Z, d.h., die Schaufelpassage in der durch die Umfangsrichtung u und die Meridionalrichtung m aufgespannten Ebene. Dargestellt sind zwei Fluidzufuhrzonen, in denen erfindungsgemäß ein Austreten aus dem Sekundärströmungsweg 16 auf die hauptströmungspfadzugewandte Seite des Deckbandes 2 vorgesehen ist. Beide Zonen sind im Wesentlichen an die Profilsaugseite gestützt: eine umfassende Zufuhrzone IA1, in der eine Zufuhr vorteilhaft ist und eine innerhalb von IA1 befindliche weiter eingeschränkte Zufuhrzone IA2, in der eine Zufuhr besonders günstig ist.

Die umfassende Zufuhrzone IA1 wird begrenzt durch:
a.) eine geradlinige Verbindung zwischen dem Vorderkantenpunkt L2 und dem von ihm in meridionaler Richtung stromauf um den Betrag 0,3 C_{M} entfernten Punkt B; C_{M} bezeichnet die meridionale Länge des Schaufelprofils an der Seitenwand;
b.) eine geradlinige Verbindung zwischen dem Punkt B und dem in meridionaler Richtung um den Betrag 0,3 C_{M} stromauf des Vorderkantenpunktes L1 liegenden Punkt A;
c.) eine geradlinige Verbindung zwischen dem Punkt A und dem Vorderkantenpunkt L1;
d.) eine geradlinige Verbindung zwischen dem Vorderkantenpunkt L1 und dem Punkt C, der sich in der Hinterkantenebene in einer Entfernung 0,6 S_{O} von der gegenüberliegenden Profilsaugseite befindet; S_{O} bezeichnet den Abstand zweier benachbarter Schaufelhinterkanten am Rand des Hauptströmungspfades;
e.) eine geradlinige Verbindung zwischen dem Punkt C und dem Hinterkantenpunkt T;
f.) die Profilsaugseite SS zwischen dem Hinterkantenpunkt T und dem Vorderkantenpunkt L2.

Die eingeschränkte Zufuhrzone IA2 wird begrenzt durch:
a.) eine geradlinige Verbindung zwischen dem Vorderkantenpunkt L2 und dem von ihm in meridionaler Richtung stromauf um den Betrag 0,3 C_{M} entfernten Punkt B; C_{M} bezeichnet die meridionale Länge des Schaufelprofils an der Seitenwand;
b.) eine geradlinige Verbindung zwischen dem Punkt B und dem bei selber Meridionalkoordinate befindlichen und in Umfangsrichtung um 0,6 S_{O} von B entfernt liegenden Punkt D; S_{O} bezeichnet den Abstand zweier benachbarter Schaufelhinterkanten am Rand des Hauptströmungspfades;
c.) eine geradlinige Verbindung zwischen dem Punkt D und dem um 0,7 C_{M} stromab von der Vorderkantenebene und relativ zum Hinterkantenpunkt T um 0,4 S_{O} in Umfangsrichtung zur benachbarten Profildruckseite hin versetzt angeordneten Punkt E;
d.) eine geradlinige Verbindung in Umfangsrichtung vom Punkt E zur Profilsaugseite;
e.) einen Teil der Profilsaugseite im Bereich zwischen der Vorderkantenebene und einer in meridionaler Richtung um 0,7 C_{M} stromab der Vorderkantenebene gelegenen Ebene.

Die Fig.3d zeigt die in Fig.3a eingezeichnete Ansicht Z-Z. Dargestellt ist eine Schaufelreihe 3, 4, die hier durch zwei benachbarte Schaufelprofile repräsentiert wird. Der Blick fällt hier vom Innern der Hauptströmung etwa senkrecht zur Meridianrichtung m und zur Umfangsrichtung u auf das Deckband 2. Stromauf und stromab des Deckbandes 2 sind die Ringspalte 14 erkennbar, die eine Verbindung zwischen Hauptströmungspfad und Deckbandkavität herstellen. Zusätzlich ist in jeder Passage zwischen zwei Schaufeln 3, 4 je eine Zufuhröffnung 17 vorgesehen, durch die Fluid aus dem Deckband 2 ausströmt. Eine erfindungsgemäß mögliche Form des Durchlasses 16 ist gepunktet dargestellt. Erfindungsgemäß sind ebenfalls mehrere Durchlässe bzw. Zufuhröffnungen pro Schaufelpassage oder in nur ausgewählten Schaufelpassagen vorgesehene Durchlässe bzw. Zufuhröffnungen möglich. Der linke Bildteil zeigt beispielhaft eine Anordnung mit kurzen schräg zur
Meridianrichtung m angeordneten Zufuhröffnungen 17, der rechte Bildteil zeigt eine Anordnung mit langen senkrecht zur Meridianrichtung m angeordneten Zufuhröffnungen 17.

Die Fig.3e zeigt die erfindungsgemäße Anordnung einer Schaufelreihe 3, 4 mit Deckband 2 in der durch die Axialrichtung x und die Radialrichtung r aufgespannten Meridianebene. Das Deckband 2 ist hier als flacher, nicht abgestufter, im Wesentlichen mit rechteckartigem Querschnitt versehener Ringkörper gegeben, der mit der umgebenden baulichen Struktur 11 verbunden ist.

Die Verbindung zwischen Deckband 2 und umgebender baulicher Struktur 11 kann, wie hier dargestellt, durch zwei angrenzende Bauteile, z. B. mit Hilfe einer schaufelfußähnlichen Gestaltung, gegeben sein. Aber auch durch einen einteiligen Körper gebildete Konfigurationen sind erfindungsgemäß möglich. Erfindungsgemäß ist im Deckband 2 ein Sekundärströmungsweg 16 vorgesehen, der das Deckband 2 durchdringt und in Hauptströmungsrichtung (dicker Pfeil von links nach rechts) gesehen stromab der Verbindung mit der umgebenden baulichen Struktur angeordnet ist. Auf diese Weise kann Fluid stromab des Deckbandes 2 in die Deckbandkavität 10 eintreten und durch den Sekundärströmungsweg, der hier als düsenartiger gekrümmter Durchlass 16 ausgeformt ist, auf die hauptströmungspfadzugewandte Seite des Deckbandes 2 ausströmen, um die Randströmung dort zu energetisieren.

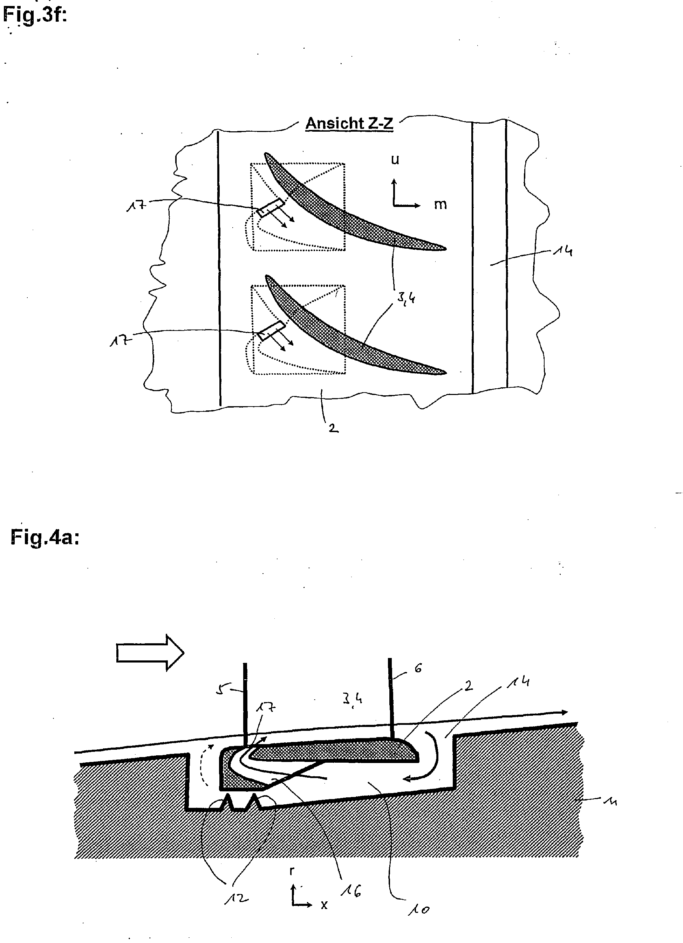

Insbesondere kann die hier dargestellte erfindungsgemäße Lösung eines Deckbandes 2 mit Durchlass 16 vorgesehen sein, wenn stromab der betreffenden Schaufelreihe 3, 4 zusätzlich ein Auslasskanal zur Abfuhr von Fluid weg vom Hauptströmungspfad der Strömungsarbeitsmaschine existiert (gepunktet im Bild eingezeichnet). Ebenfalls eingezeichnet ist die Ansicht Z-Z, die in Fig.3f in bekannter Weise eine erfindungsgemäß mögliche Anordnung von Zufuhröffnungen und Durchlässen zeigt.

Die Fig. 4a zeigt eine weitere erfindungsgemäße Anordnung einer Schaufelreihe 3, 4 mit Deckband 2 in der Meridianebene. Das Deckband 2 besitzt hier nicht den üblicherweise gewählten rechteckähnlichen Querschnitt, sondern einen erfindungsgemäß besonders günstigen in Hauptströmungsrichtung abgestuften Querschnitt, der es erlaubt, dem Durchlass 16 im Deckband 2 Fluid von der Deckbandabströmseite her zuzuführen. Auf diese Weise wird erreicht, dass die Zuströmung zum Durchlass 16 in einem vergrößerten Kavitätenquerschnitt und entsprechend verlustärmer stattfindet. Zudem ist der Durchlass 16 selbst bei dieser erfindungsgemäßen Lösung kürzer und strömungsgünstiger gestaltbar, nämlich als kurzer nähe an der Zufuhrstelle angeordneter gebogener Kanal. Das Deckband 2 und die umgebende bauliche Struktur 11 führen eine rotierende Relativbewegung zueinander aus. Zur Leckageabdichtung ist hier eine zweifache Dichtspitze 12 vorgesehen. Die in der eingezeichneten Ansicht Z-Z sichtbare Anordnung gleicht der Darstellung in Fig.3d.

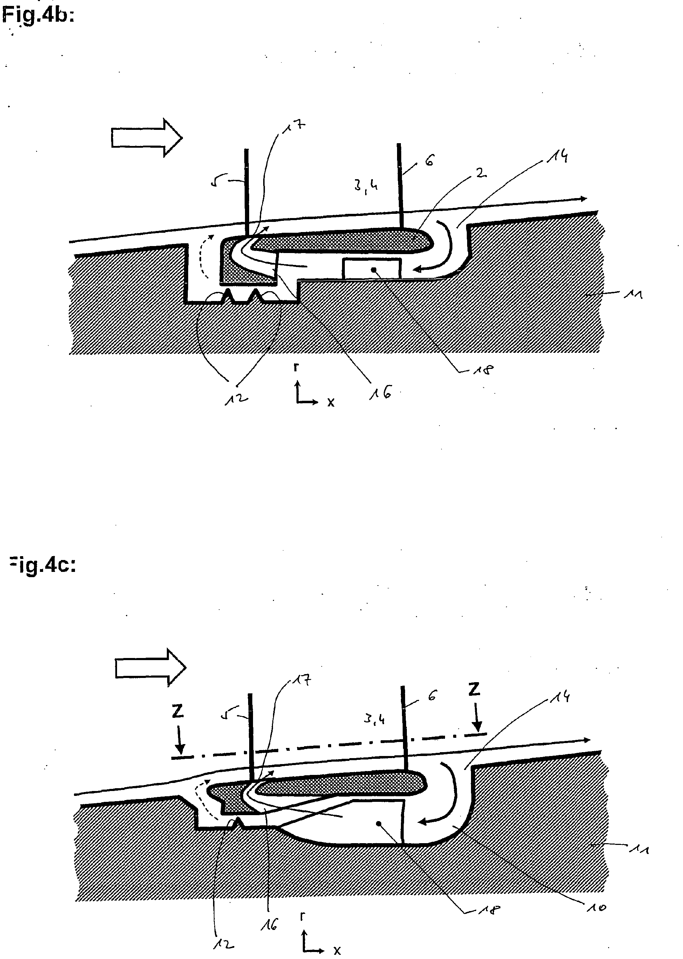

Die Fig. 4b zeigt eine erfindungsgemäß um weitere Elemente ergänzte Anordnung einer Schaufelreihe 3, 4 mit Deckband 2 in der Meridianebene. Das Deckband 2 besitzt auch hier den erfindungsgemäß in Hauptströmungsrichtung abgestuften Querschnitt mit Durchlasseintritt 14 an der Deckbandabströmseite. Das Deckband 2 und die umgebende bauliche Struktur 11 führen eine rotierende Relativbewegung zueinander aus und an der umgebenden baulichen Struktur ist ein Umlenkmittel 18 vorgesehen, das eine Umlenkung des dem Durchlass 16 zuströmenden Fluides vornimmt. Für den Fall, dass die umgebende bauliche Struktur 11 rotierend und das Deckband 2 stehend konstruiert ist, besitzt das Umlenkmittel 18 erfindungsgemäß die Funktion eines Impellers 18, der dem Durchlass 16 Fluid zufördert. Erfindungsgemäß kann das Umlenkmittel 18 aber auch am Deckband 2 vorgesehen sein, um die Zuströmung des Durchlasses 16 bezüglich seiner Richtung zu korrigieren. Ebenfalls erfindungsgemäß kann der Durchlass 16 selbst Streben, Strömungsteiler oder Umlenkhilfen aufweisen.

Die Fig. 4c zeigt eine von Fig.4b abgewandelte Form einer erfindungsgemäßen Lösung eines Deckbandes 2 mit Durchlass 16 und Umlenkmittel 18. Das Deckband 2 besitzt auch hier einen in Hauptströmungsrichtung abgestuften Querschnitt mit Durchlasseintritt 14 an der Deckbandabströmseite. Das Deckband 2 und die umgebende bauliche Struktur 11 führen eine rotierende Relativbewegung zueinander aus. Der Konturverlauf der umgebenden baulichen Struktur 11 im Bereich des Umlenkmittels 18 und das Umlenkmittel 18 selbst sind hier erfindungsgemäß so gestaltet, dass der gebildete Strömungskanal eine Neigung/Krümmung hin zum Deckband 2 aufweist in Richtung der Strömung in der Deckbandkavität betrachtet. So erhält die Zuströmung des Durchlasses 16 eine Richtungskomponente zum Deckband 2 hin. In Kombination mit den bisherigen erfindungsgemäßen Merkmalen steht das Deckband 2 hier deutlich in den Hauptströmungspfad vor, um die Menge der in den Hauptströmungspfad tretenden Leckagestroms durch einen Staueffekt an der Zuströmseite des Deckbandes 2 zu vermindern.

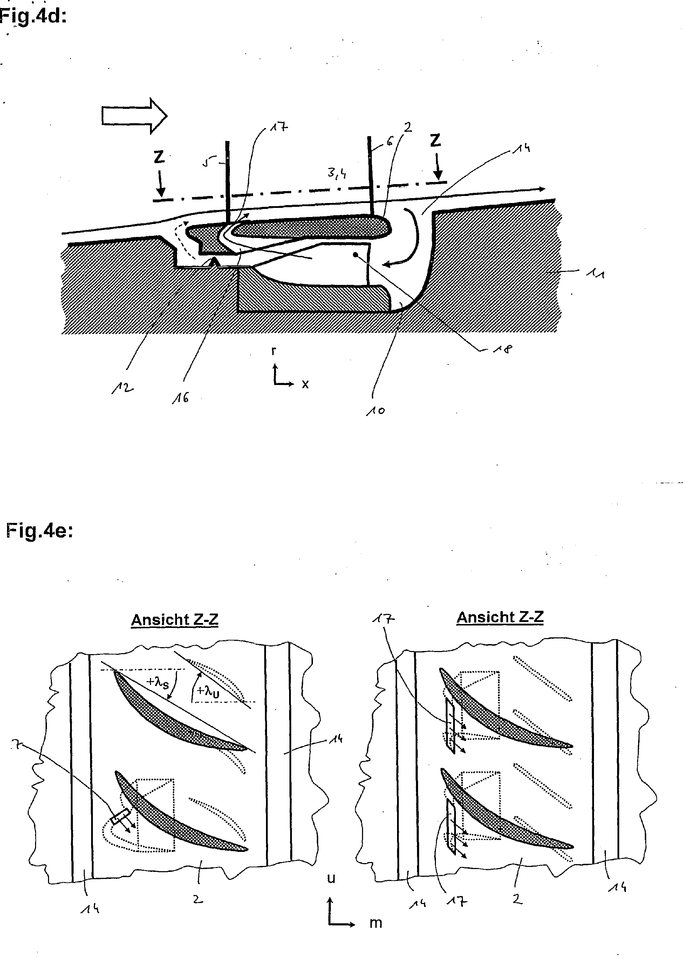

Die Fig. 4d zeigt eine von Fig.4c abgewandelte Form einer erfindungsgemäßen Lösung eines Deckbandes 2 mit Durchlass 16 und Umlenkmittel 18. Hier ist das Umlenkmittel 18 als separates und mit der umgebenden baulichen Struktur 11 verbundenes Ringbauteil vorgesehen.

Die Fig.4e zeigt die in den Figuren 4c und 4d eingezeichnete Ansicht Z-Z. Erkennbar sind die Profile der Schaufelreihe 3, 4 im Hauptströmungspfad sowie die Deckbanddurchlässe 17, die an Zufuhröffnungen am Hauptströmungspfad enden. In der hier dargestellten erfindungsgemäßen Lösung ist das Umlenkmittel 18 durch eine Reihe von gekrümmten oder auch ungekrümmten Strömungsprofilen oder einfachen Stegen gebildet. Bei Befestigung des Umlenkmittels 18 an der das Deckband 2 umgebenden baulichen Struktur 11 ist es erfindungsgemäß vorgesehen, dass der Staffelungswinkel λ_{S} der Schaufeln im Hauptströmungspfad und der Staffelungswinkel λ_{U} der Umlenkmittel 18 in der Deckbandkavität nach der in Fig.4e gegebenen Definition gleiches Vorzeichen besitzen.

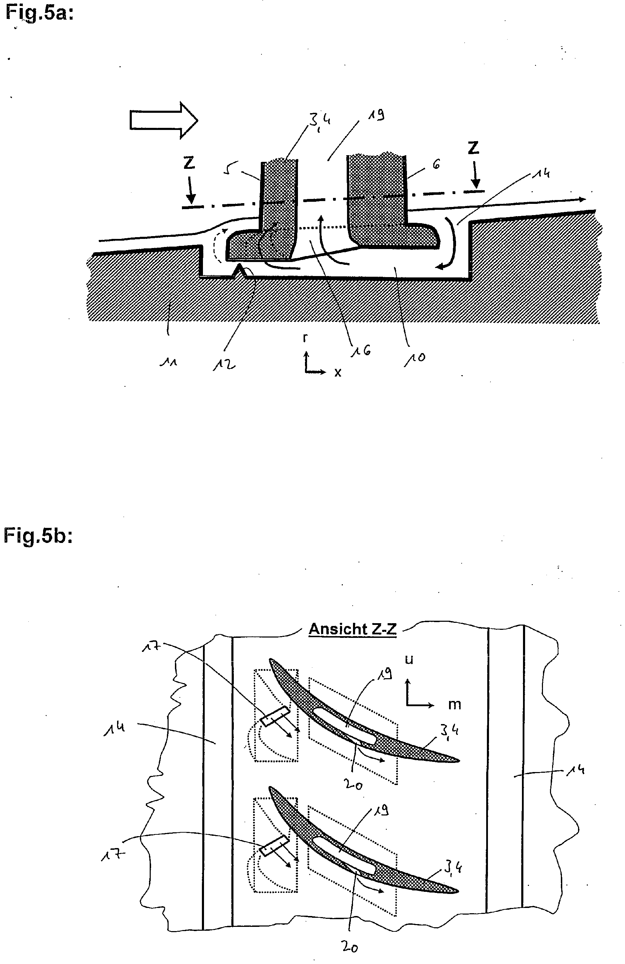

Die Fig. 5a zeigt eine weitere erfindungsgemäße Anordnung eines Schaufeldeckbandes 2 mit Durchlass 16 in der Meridianebene. Das Deckband 2 besitzt eine Abstufung an der hauptströmungspfadabgewandten Seite, an der zwei unterschiedliche erfindungsgemäße Durchlässe 16 beginnen. Zum einen wird das Deckband 2 von einem Sekundärströmungsweg 16 durchdrungen, der, wie im Vorangehenden schon beschrieben, an der hauptströmungszugewandten Seite des Deckbandes 2 endet (Durchlasstyp 1), und zum anderen führt ein weiterer Sekundärströmungsweg 16 durch das Deckband 2 in das Innere, mindestens einer mit dem Deckband 2 verbundenen Schaufeln 3, 4 (Durchlasstyp 2). Die Schaufeln 3, 4, die Fluid durch den Deckbanddurchlass 16 des Typs 2 empfangen, besitzen einen oder mehrere Hohlräume 19, aus denen das Fluid schließlich durch eine oder mehrere Öffnungen 20 auf die von der Hauptströmung benetzte Schaufeloberfläche austritt und so der Hauptströmung zugeführt wird. Details der Fluidführung nach dem Passieren des Durchlasses sind aus dem Stand der Technik bekannt. Selbstverständlich sind auch Deckbandanordnungen, die allein einen oder mehrere Durchlässe des Typs 2 vorsehen, erfindungsgemäß. Ebenfalls erfindungsgemäß ist ein Durchlass des Typs 2, wenn dieser Streben, Strömungsteiler oder Umlenkhilfen aufweist. Im Bild eingezeichnet ist desweiteren die Ansicht Z-Z, die in Fig.5b in bekannter Weise die erfindungsgemäße Anordnung von Zufuhröffnungen und Durchlässen zeigt.

In Fig.5b ist beispielhaft eine Anordnung mit jeweils einem Hohlraum 19 pro Schaufel 3, 4 gezeigt, in den das Fluid aus der Deckbandkavität 10 durch den Durchlass 16 (Typ 2) gelangt. Im hier gezeigten Beispiel strömt das Fluid auf die konvexe Saugseite der Schaufel 3, 4 aus und mischt sich der Hauptströmung bei. Gleichzeitig wird in der Umgebung der Schaufeln 3, 4 Fluid durch einen anderen Durchlass (Typ 1) an der Deckbandoberfläche dem Hauptströmungspfad zugeführt.

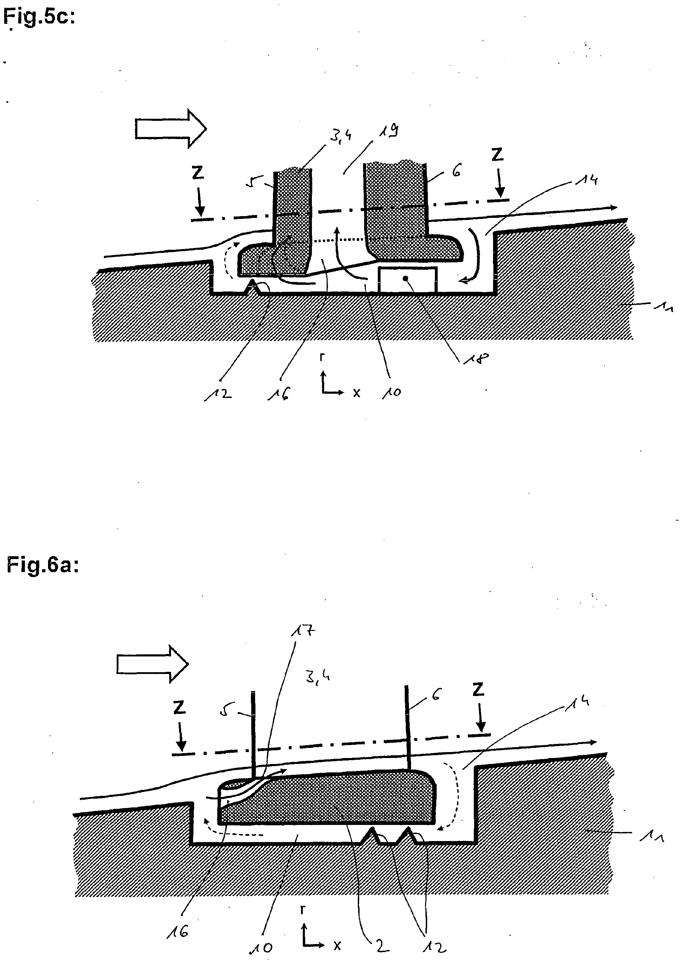

Die Fig.5c zeigt ebenfalls eine Deckbandanordnung mit einer Kombination aus Durchlasstyp 1 und Durchlasstyp 2. An der umgebenden baulichen Struktur 11 ist ein Umlenkmittel 18 vorgesehen, das eine Umlenkung des den Durchlässen zuströmenden Fluides vornimmt. Für den Fall, dass die umgebende bauliche Struktur 11 rotierend und das Deckband 2 stehend konstruiert ist, besitzt das Umlenkmittel 18 erfindungsgemäß die Funktion eines Impellers, der den Durchlässen Fluid zufördert. Erfindungsgemäß kann das Umlenkmittel 18 aber auch am Deckband 2 vorgesehen sein, um die Zuströmung des Durchlasses bezüglich seiner Richtung zu korrigieren. Ebenfalls erfindungsgemäß kann der Durchlass selbst Streben, Strömungsteiler oder Umlenkhilfen aufweisen.

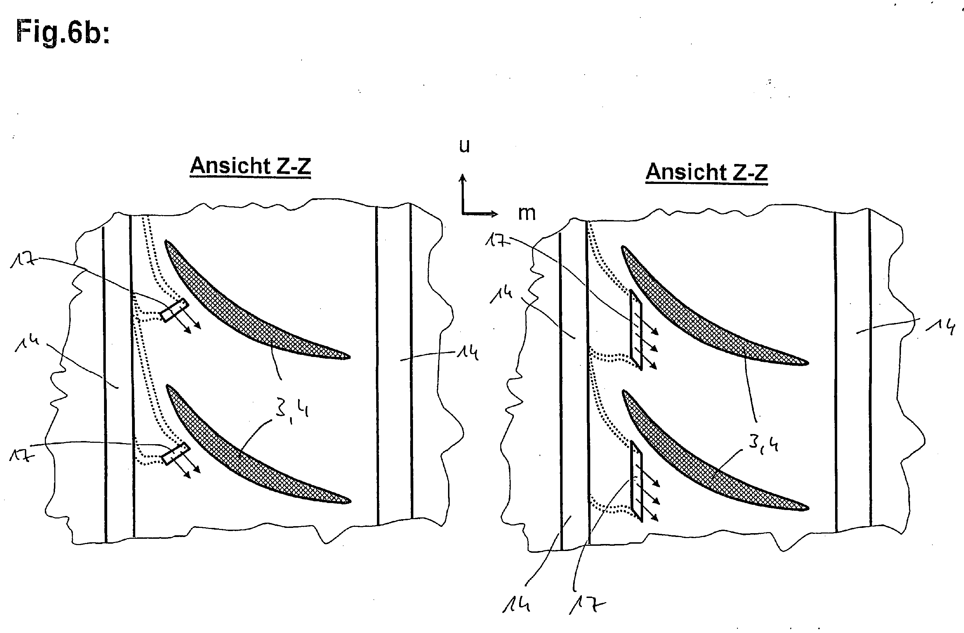

Die Fig. 6a zeigt ein weiteres erfindungsgemäßes Konzept für die Anordnung eines Schaufeldeckbandes 2 mit Durchlass 16 in der Meridianebene. Der Durchlass 16 beginnt an der Zuströmseite des Deckbandes 2 und endet an der hauptströmungszugewandten Seite. Damit handelt es sich um einen Durchlass des Typs 1. Besonders günstig für dieses erfindungsgemäße Deckband 2 mit Durchlass ist es, wenn, wie hier dargestellt, das Deckband 2 um einen deutlichen Betrag in den Hauptströmungspfad vorsteht. Im Bild eingezeichnet ist desweiteren die Ansicht Z-Z, die in Fig.6b in bekannter Weise die erfindungsgemäße Anordnung von Zufuhröffnungen und Durchlässen zeigt.

Die Erfindung ist auch wie folgt zu beschreiben:
Strömungsarbeitsmaschine mit einem Hauptströmungspfad, in welchem zumindest eine Reihe von Schaufeln angeordnet ist, sowie mit einem Schaufeldeckband, welches im Bereich einer Schaufelreihe eine Begrenzung des Hauptströmungspfades bildet und welches in eine Ausnehmung einer umgebenden baulichen Struktur eingebettet ist, wobei der auf diese Weise gebildete Raum (Kavität) zwischen dem Deckband und der umgebenden baulichen Struktur mindestens an der Abströmseite des Deckbandes eine ringförmige Verbindung zum Hauptströmungspfad aufweist, und wobei das Schaufeldeckband von mindestens einem Sekundärströmungsweg durchdrungen wird, der ausgehend von einem Ort hohen Drucks am Deckband an eine von der Hauptströmung benetzte Oberfläche führt,
wobei die Schaufelreihe, in deren Bereich das Schaufeldeckband angeordnet ist, Schaufeln mit fester Verbindung zum Deckband aufweist,
wobei die Schaufelreihe, in deren Bereich das Schaufeldeckband angeordnet ist, Schaufeln aufweist, die um eine Achse verdrehbar mit ihm verbunden sind,
wobei mindestens ein das Schaufeldeckband durchdringender Sekundärströmungsweg an einer den Hauptströmungspfad der Strömungsarbeitsmaschine an Nabe oder Gehäuse begrenzenden Oberfläche mündet,
wobei ein das Schaufeldeckband durchdringender Sekundärströmungsweg einen Durchlass bildet, dessen Austrittsöffnung in der Zufuhrzone IA1 vorgesehen ist, die wie folgt begrenzt wird:
   a.) eine geradlinige Verbindung zwischen dem Vorderkantenpunkt L2 und dem von ihm in meridionaler Richtung stromauf um den Betrag 0,3 C_{M} entfernten Punkt B; C_{M} bezeichnet die meridionale Länge des Schaufelprofils an der Seitenwand,
   b.) eine geradlinige Verbindung zwischen dem Punkt B und dem in meridionaler Richtung um den Betrag 0,3 C_{M} stromauf des Vorderkantenpunktes L1 liegenden Punkt A,
   c.) eine geradlinige Verbindung zwischen dem Punkt A und dem Vorderkantenpunkt L1,
   d.) eine geradlinige Verbindung zwischen dem Vorderkantenpunkt L1 und dem Punkt C, der sich in der Hinterkantenebene in einer Entfernung 0,6 S_{O} von der gegenüberliegenden Profilsaugseite befindet; S_{O} bezeichnet den Abstand zweier benachbarter Schaufelhinterkanten am Rand des Hauptströmungspfades,
   e.) eine geradlinige Verbindung zwischen dem Punkt C und dem Hinterkantenpunkt T, und
   f.) die Profilsaugseite SS,
wobei mindestens ein das Schaufeldeckband durchdringender Strömungsweg einen Durchlass bildet, dessen Austrittsöffnung in der eingeschränkten Zufuhrzone IA2 vorgesehen ist, die wie folgt begrenzt wird:
   a.) eine geradlinige Verbindung zwischen dem Vorderkantenpunkt L2 und dem von ihm in meridionaler Richtung stromauf um den Betrag 0,3 C_{M} entfernten Punkt B; C_{M} bezeichnet die meridionale Länge des Schaufelprofils an der Seitenwand,
   b.) eine geradlinige Verbindung zwischen dem Punkt B und dem bei selber Meridionalkoordinate befindlichen und in Umfangsrichtung um 0,6 S_{O} von B entfernt liegenden Punkt D; S_{O} bezeichnet den Abstand zweier benachbarter Schaufelhinterkanten am Rand des Hauptströmungspfades,
   c.) eine geradlinige Verbindung zwischen dem Punkt D und dem um 0,7 C_{M} stromab von der Vorderkantenebene und relativ zum Hinterkantenpunkt T um 0,4 S_{O} in Umfangsrichtung zur benachbarten Profildruckseite hin versetzt angeordneten Punkt E,
   d.) eine geradlinige Verbindung in Umfangsrichtung vom Punkt E zur Profilsaugseite, und
   e.) einen Teil der Profilsaugseite im Bereich zwischen der Vorderkantenebene und einer in meridionaler Richtung um 0,7 C_{M} stromab der Vorderkantenebene gelegenen Ebene,
wobei mindestens ein das Schaufeldeckband durchdringender Sekundärströmungsweg (Durchlass) in das Innere mindestens einer Schaufel der mit dem Deckband verbundenen Schaufelreihe führt, wobei die Schaufel ihrerseits über mindestens eine Öffnung in der Schaufelprofiloberfläche verfügt, durch die Fluid in den Hauptströmungspfad entweichen kann,
wobei der Sekundärströmungsweg (Durchlass) im Bereich seiner Austrittsöffnung die Form einer Düse aufweist, die so beschaffen ist, dass der austretende Fluidstrahl im Wesentlichen tangential zur Hauptströmungspfadbegrenzung gerichtet ist,
wobei die Durchlassaustrittsöffnung (Zufuhröffnung) in den Hauptströmungspfad vorsteht,
wobei das Schaufeldeckband auf seiner hauptströmungsabgewandten Seite mindestens eine Abstufung aufweist, wobei ein wenigstens teilweise der Hauptströmungsrichtung entgegengesetztes Einströmen des Fluids in den Durchlass vorgesehen ist, wobei
   a.) das Schaufeldeckband und die umgebende bauliche Struktur eine rotierende Relativbewegung zueinander ausführen und um das Deckband herum eine Kavität vorgesehen ist, die sowohl direkt stromauf und alsauch direkt stromab des Deckbandes je eine ringförmige Öffnung zum Hauptströmungspfad aufweist, und
   b.) im Bereich der Kavität Mittel zur Leckageabdichtung vorgesehen sind,
wobei im Bereich der Kavität Mittel zur Umlenkung des Sekundärfluidstroms vorgesehen sind,
wobei die Mittel zur Umlenkung eine im Wesentlichen der Hauptströmung entgegengesetzte Durchströmung der Deckbandkavität vorsehen und in Hauptströmungsrichtung betrachtet die Mittel zur Leckageabdichtung stromauf den Mitteln zur Umlenkung angeordnet sind,
wobei die Mittel zur Umlenkung des Sekundärfluidstroms als mindestens eine Reihe von schaufelartigen Körpern ausgebildet sind,
wobei ein Mittel zur Umlenkung des Sekundärfluidstroms mit der das Deckband umgebenden baulichen Struktur verbunden ist und als Mittel zur Umlenkung vorgesehene schaufelartige Profile bezüglich ihres Staffelungswinkel gleiches Vorzeichen aufweisen, wie die Profile der mit dem Deckband verbundenen Schaufeln im Hauptströmungspfad,
wobei
   a.) die besagte Schaufelreihe mit Deckband eine Statorschaufelreihe ist,
   b.) die das Deckband umgebende bauliche Struktur eine Rotortrommel ist, und
   c.) die Mittel zur Umlenkung mit der Rotortrommel verbunden sind und auf diese Weise ein Sekundärimpeller vorgesehen ist.

### Neue Bezugszeichenliste

- 1: Gehäuse (stehend)
- 2: Schaufeldeckband (SDB) / Deckband
- 3: Rotor / Rotorschaufelreihe
- 4: Stator / Statorschaufelreihe
- 5: Schaufelvorderkante (VK)
- 6: Schaufelhinterkante (HK)
- 7: Maschinenachse
- 8: Nabe (rotierend)
- 9: Statorschaufelfuß / Schaufelfuß
- 10: Kavität / Deckbandkavität
- 11: bauliche Struktur mit rotierender Relativbewegung
- 12: Dichtung / Dichtungsmittel / Dichtspitze
- 13: Kammer
- 14: Ringspalt / Durchlasseintritt
- 15: Ringkanal
- 16: Durchlass / Sekundärströmungsweg
- 17: Ausströmöffnung / Öffnung / Zuführöffnung / Durchlassaustrittsöffnung
- 18: Umlenkmittel / Impeller
- 19: Hohlraum
- 20: Öffnung
- 21: Vorleitrad

## Patentansprüche

1. Strömungsarbeitsmaschine mit einem Hauptströmungspfad, in welchem zumindest eine Reihe von Schaufeln (3, 4) angeordnet ist, sowie mit einem Schaufeldeckband (2), welches im Bereich einer Schaufelreihe (3, 4) eine Begrenzung des Hauptströmungspfades bildet, wobei das Schaufeldeckband (2) von mindestens einem Sekundärströmungsweg (16) durchdrungen wird, **dadurch gekennzeichnet, dass** das Schaufeldeckband (2) in einer ringförmigen Kavität (10) einer umgebenden baulichen Struktur (11) angeordnet ist, wobei die auf diese Weise gebildete Kavität (10) zwischen dem Deckband (2) und der umgebenden baulichen Struktur (11) mindestens an der Abströmseite der Schaufel des Schaufeldeckbandes (2) eine ringförmige Verbindung (14) zum Hauptströmungspfad aufweist, wobei der Sekundärströmungsweg (16) ausgehend von einem Ort hohen Drucks am Deckband (2) an einer von der Hauptströmung benetzten Oberfläche mündet, um eine Randströmung des Hauptströmungspfades zu energetisieren, wobei der Sekundärströmungsweg (16), bezogen auf die Hauptströmungsrichtung, stromab von Mitteln (12) zur Leckageabdichtung angeordnet ist; und wobei der Sekundärströmungsweg (16) im Bereich seiner Austrittsöffnung (17) die Form einer Düse aufweist, die so beschaffen ist, dass der austretende Fluidstrahl im Wesentlichen tangential zur Hauptströmungspfadbegrenzung gerichtet ist.

2. Strömungsarbeitsmaschine nach Anspruch 1, **dadurch gekennzeichnet, dass** die Schaufelreihe (3, 4), in deren Bereich das Schaufeldeckband (2) angeordnet ist, Schaufeln mit fester Verbindung zum Deckband (2) aufweist.

3. Strömungsarbeitsmaschine nach Anspruch 1, **dadurch gekennzeichnet, dass** die Schaufelreihe (3, 4), in deren Bereich das Schaufeldeckband (2) angeordnet ist, Schaufeln aufweist, die um eine Achse verdrehbar mit dem Schaufeldeckband (2) verbunden sind.

4. Strömungsarbeitsmaschine nach einem der Ansprüche 1 bis 3, **dadurch gekennzeichnet, dass** mindestens ein das Schaufeldeckband (2) durchdringender Sekundärströmungsweg (16) an einer den Hauptströmungspfad der Strömungsarbeitsmaschine an einer Nabe (8) oder einem Gehäuse (1) begrenzenden Oberfläche mündet.

5. Strömungsarbeitsmaschine nach Anspruch 4, **dadurch gekennzeichnet, dass** mindestens ein das Schaufeldeckband (2) durchdringender Sekundärströmungsweg (16) einen Durchlass bildet, dessen Austrittsöffnung (17) in einer Zufuhrzone IA1 angeordnet ist, die wie folgt begrenzt wird:
a.) eine geradlinige Verbindung zwischen einem Vorderkantenpunkt L2 und einem von dem Vorderkantenpunkt L2 in meridionaler Richtung stromauf um den Betrag 0,3 C_{M} entfernten Punkt B; C_{M} bezeichnet die meridionale Länge eines Schaufelprofils an der Seitenwand,
b.) eine geradlinige Verbindung zwischen dem Punkt B und einem in meridionaler Richtung um den Betrag 0,3 C_{M} stromauf eines Vorderkantenpunktes L2 liegenden Punkt A,
c.) eine geradlinige Verbindung zwischen dem Punkt A und einem Vorderkantenpunkt L1,
d.) eine geradlinige Verbindung zwischen dem Vorderkantenpunkt L1 und einem Punkt C, der sich in der Hinterkantenebene in einer Entfernung 0,6 S_{O} von der gegenüberliegenden Profilsaugseite befindet; S_{O} bezeichnet den Abstand zweier benachbarter Schaufelhinterkanten (6) am Rand des Hauptströmungspfades,
e.) eine geradlinige Verbindung zwischen dem Punkt C und einem Hinterkantenpunkt T, und
f.) eine Profilsaugseite SS zwischen dem Hinterkantenpunkt T und dem Vorderkantenpunkt L2.

6. Strömungsarbeitsmaschine nach einem der Ansprüche 4 oder 5, **dadurch gekennzeichnet, dass** mindestens ein das Schaufeldeckband (2) durchdringender Strömungsweg (16) einen Durchlass bildet, dessen Austrittsöffnung (17) in einer eingeschränkten Zufuhrzone IA2 vorgesehen ist, die wie folgt begrenzt wird:
a.) eine geradlinige Verbindung zwischen einem Vorderkantenpunkt L2 und einem von dem Vorderkantenpunkt L2 in meridionaler Richtung stromauf um den Betrag 0,3 C_{M} entfernten Punkt B; C_{M} bezeichnet die meridionale Länge eines Schaufelprofils an der Seitenwand,
b.) eine geradlinige Verbindung zwischen dem Punkt B und einem bei selber Meridionalkoordinate befindlichen und in Umfangsrichtung um 0,6 S_{O} von B entfernt liegenden Punkt D; S_{O} bezeichnet den Abstand zweier benachbarter Schaufelhinterkanten (6) am Rand des Hauptströmungspfades,
c.) eine geradlinige Verbindung zwischen dem Punkt D und einem um 0,7 C_{M} stromab von der Vorderkantenebene und relativ zu einem Hinterkantenpunkt T um 0,4 S_{O} in Umfangsrichtung zur benachbarten Profildruckseite hin versetzt angeordneten Punkt E,
d.) eine geradlinige Verbindung in Umfangsrichtung vom Punkt E zur Profilsaugseite,
e.) einen Teil der Profilsaugseite im Bereich zwischen der Vorderkantenebene und einer in meridionaler Richtung um 0,7 C_{M} stromab der Vorderkantenebene gelegenen Ebene.

7. Strömungsarbeitsmaschine nach einem der Ansprüche 1 bis 6, **dadurch gekennzeichnet, dass** mindestens ein das Schaufeldeckband (2) durchdringender Sekundärströmungsweg (16) in das Innere mindestens einer Schaufel (3, 4) der mit dem Deckband (2) verbundenen Schaufelreihe führt, wobei die Schaufel (3, 4) mit mindestens einer Öffnung (20) in der Schaufelprofiloberfläche versehen ist, durch die Fluid in den Hauptströmungspfad entweicht.

8. Strömungsarbeitsmaschine nach einem der Ansprüche 1 bis 7, **dadurch gekennzeichnet, dass** die Durchlassaustrittsöffnung (17) in den Hauptströmungspfad vorsteht.

9. Strömungsarbeitsmaschine nach einem der Ansprüche 1 bis 8, **dadurch gekennzeichnet, dass** das Schaufeldeckband (2) auf seiner hauptströmungsabgewandten Seite mindestens eine Abstufung aufweist, wobei ein wenigstens teilweise der Hauptströmungsrichtung entgegengesetztes Einströmen des Fluids in den Sekundärströmungsweg (16) vorgesehen ist.

10. Strömungsarbeitsmaschine nach einem der Ansprüche 1 bis 9, **dadurch gekennzeichnet, dass** das Schaufeldeckband (2) und die umgebende bauliche Struktur (11) eine rotierende Relativbewegung zueinander ausführen und um das Deckband (2) herum eine Kavität (10) vorgesehen ist, die sowohl direkt stromauf als auch direkt stromab des Deckbandes (2) je eine ringförmige Öffnung (14) zum Hauptströmungspfad aufweist, und dass im Bereich der Kavität (10) die Mittel (12) zur Leckageabdichtung vorgesehen sind.

11. Strömungsarbeitsmaschine nach Anspruch 10, **dadurch gekennzeichnet, dass** im Bereich der Kavität (10) Mittel (18) zur Umlenkung des Sekundärfluidstroms vorgesehen sind.

12. Strömungsarbeitsmaschine nach Anspruch 11, **dadurch gekennzeichnet, dass** die Mittel (18) zur Umlenkung eine im Wesentlichen der Hauptströmung entgegengesetzte Durchströmung der Deckbandkavität (10) bewirken und in Hauptströmungsrichtung betrachtet die Mittel (12) zur Leckageabdichtung stromauf den Mitteln (18) zur Umlenkung angeordnet sind.

13. Strömungsarbeitsmaschine nach Anspruch 11 oder 12, **dadurch gekennzeichnet, dass** die Mittel (18) zur Umlenkung des Sekundärfluidstroms als mindestens eine Reihe von schaufelartigen Körpern ausgebildet sind.

14. Strömungsarbeitsmaschine nach einem der Ansprüche 11 bis 13, **dadurch gekennzeichnet, dass** ein Mittel (18) zur Umlenkung des Sekundärfluidstroms mit der das Deckband (2) umgebenden baulichen Struktur verbunden ist und als Mittel (18) zur Umlenkung vorgesehene schaufelartige Profile bezüglich ihres Staffelungswinkel gleiches Vorzeichen aufweisen, wie die Profile der mit dem Deckband (2) verbundenen Schaufeln (3, 4) im Hauptströmungspfad und oder dass die besagte Schaufelreihe (3, 4) mit dem Deckband (2) in Form einer Statorschaufelreihe ausgebildet ist, dass die das Deckband (2) umgebende bauliche Struktur (11) eine Rotortrommel ist, und dass die Mittel (18) zur Umlenkung mit der Rotortrommel verbunden sind und auf diese Weise ein Sekundärimpeller vorgesehen ist.

## Claims

1. Fluid-flow machine with a main flow path in which at least one row of blades (3, 4) is arranged, and with a blade shroud (2) which forms a confinement of the main flow path in the area of a blade row (3, 4), with the blade shroud (2) being penetrated by at least one secondary flow path (16), **characterized in that** the blade shroud (2) is arranged in an annular cavity (10) of a surrounding physical structure (11), with the cavity (10) so formed being provided with an annular connection (14) to the main flow path between the shroud (2) and the surrounding physical structure (11), at least on the outflow side of the blade of the blade shroud (2), with the secondary flow path (16) commencing at a point of high pressure on the shroud (2), issuing at a surface wetted by the main flow, in order to energize a marginal flow of the main flow path, with the secondary flow path (16), relative to the main flow direction, being arranged downstream of leakage sealing means (12), and with the secondary flow path (16) in the area of its exit opening (17) having the shape of a nozzle which is designed such that the exiting fluid jet is essentially tangentially directed to the confinement of the main flow path.

2. Fluid-flow machine in accordance with Claim 1, **characterized in that** the blade row (3, 4), in the area of which the blade shroud (2) is arranged has blades which are fixedly connected to the shroud (2).

3. Fluid-flow machine in accordance with Claim 1, **characterized in that** the blade row (3, 4), in the area of which the blade shroud (2) is arranged has blades which are rotatably connected to the blade shroud (2) around an axis.

4. Fluid-flow machine in accordance with one of the Claims 1 to 3, **characterized in that** at least one secondary flow path (16) penetrating the blade shroud (2) issues at a surface confining the main flow path of the fluid-flow machine on a hub (8) or a casing (1).

5. Fluid-flow machine in accordance with Claim 4, **characterized in that** at least one secondary flow path (16) penetrating the blade shroud (2) forms a passage whose exit opening (17) is disposed in a supply zone IA1, which is delimited as follows:
a.) a rectilinear connection between a leading edge point L2 and a point B 0.3 C_{M} remote from the leading edge point L2 upstream in the meridional direction; C_{M} designates the meridional length of a blade profile on the sidewall,
b.) a rectilinear connection between the point B and a point A, which is 0.3 C_{M} upstream of a leading edge point L2 in the meridional direction,
c.) a rectilinear connection between the point A and a leading edge point L1,
d.) a rectilinear connection between the leading edge point L1 and a point C located in the trailing edge plane at a distance of 0.6 S_{O} from the opposite profile suction side; S_{O} designates the distance between two adjacent blade trailing edges (6) at the boundary of the main flow path,
e.) a rectilinear connection between the point C and a trailing edge point T, and
f.) a profile suction side SS between the trailing edge point T and the leading edge point L2.

6. Fluid-flow machine in accordance with one of the Claims 4 or 5, **characterized in that** at least one flow path (16) penetrating the blade shroud (2) forms a passage whose exit opening (17) is disposed in a restricted supply zone IA2, which is delimited as follows:
a.) a rectilinear connection between a leading edge point L2 and a point B 0.3 C_{M} remote from the leading edge point L2 upstream in the meridional direction; C_{M} designates the meridional length of a blade profile on the sidewall,
b.) a rectilinear connection between the point B and a point D located at the same meridional coordinate and 0.6 S_{O} remote from B in the circumferential direction; S_{O} designates the distance between two adjacent blade trailing edges (6) at the boundary of the main flow path,
c.) a rectilinear connection between the point D and a point E located 0.7 C_{M} downstream of the leading edge plane and, relative to a trailing edge point T, offset to the adjacent profile pressure side by 0.4 S_{O} in the circumferential direction,
d.) a rectilinear connection between the point E and the profile suction side in the circumferential direction,
e.) a portion of the profile suction side in the area between the leading edge plane and a plane located 0.7 C_{M} downstream of the leading edge plane in the meridional direction.

7. Fluid-flow machine in accordance with one of the Claims 1 to 6, **characterized in that** at least one secondary flow path (16) penetrating the blade shroud (2) leads into the interior of at least one blade (3, 4) of the blade row connected to the shroud (2), with the blade (3, 4) being provided with at least one opening (20) in the blade profile surface through which fluid issues into the main flow path.

8. Fluid-flow machine in accordance with one of the Claims 1 to 7, **characterized in that** the passage exit opening (17) protrudes into the main flow path.

9. Fluid-flow machine in accordance with one of the Claims 1 to 8, **characterized in that** the blade shroud (2) has, on its side facing away from the main flow at least one step, with an inflow of the fluid into the secondary flow path (16) being provided at least partially opposite to the main flow direction.

10. Fluid-flow machine in accordance with one of the Claims 1 to 9, **characterized in that** the blade shroud (2) and the surrounding physical structure (11) perform a rotary movement relative to each other, and a cavity (10) is provided around the shroud (2) which has annular openings (14) to the main flow path, one directly on the upstream side and another one directly on the downstream side of the shroud (2), and that leakage sealing means (12) are provided in the area of the cavity (10).

11. Fluid-flow machine in accordance with Claim 10, **characterized in that** means (18) for deflecting the secondary fluid flow are provided in the area of the cavity (10).

12. Fluid-flow machine in accordance with Claim 11, **characterized in that** the deflecting means (18) provide that the shroud cavity (10) is flown essentially opposite to the main flow, and, when viewed in the main flow direction, the leakage sealing means (12) are arranged on the upstream side of the deflecting means (18).

13. Fluid-flow machine in accordance with Claim 11 or 12, **characterized in that** the means (18) for deflecting the secondary fluid flow are provided as at least one row of blade-type bodies.

14. Fluid-flow machine in accordance with one of the Claims 11 to 13, **characterized in that** a means (18) for deflecting the secondary fluid flow is connected to the physical structure surrounding the shroud (2), and that blade-type profiles provided as deflecting means (18) and the profiles of the blades (3, 4) connected to the shroud (2) in the main flow path have equally signed stagger angles, and/ or that said blade row (3, 4) with the shroud (2) is designed in the form of a stator blade row, that the physical structure (11) surrounding the shroud (2) is a rotor drum, and that the deflecting means (18) are connected to the rotor drum, thereby providing a secondary impeller.

## Revendications

1. Machine à écoulement avec une voie d'écoulement principale dans laquelle est disposée au moins une rangée d'aubes (3, 4) ainsi qu'avec une virole d'aube (2) qui forme une délimitation de la voie d'écoulement principale dans la zone d'une rangée d'aubes (3, 4), sachant que la virole d'aube (2) est traversée par au moins une voie d'écoulement secondaire (16), **caractérisée en ce que** la virole d'aube (2) est disposée dans une cavité (10) de forme annulaire d'une structure physique environnante (11), sachant que la cavité (10) ainsi formée présente une liaison de forme annulaire (14) à la voie d'écoulement principale entre la virole (2) et la structure physique environnante (11), au moins sur le côté d'efflux de l'aube de la virole d'aube (2), sachant que la voie d'écoulement secondaire (16) partant d'un point de haute pression sur la virole (2) débouche sur une surface humidifiée par l'écoulement principal pour énergétiser un écoulement marginal de la voie d'écoulement principale, sachant que la voie d'écoulement secondaire (16) est disposée en aval de moyens (12) d'étanchéification de fuites, par rapport au sens d'écoulement principal et sachant que la voie d'écoulement secondaire (16) présente, dans la zone de son ouverture de sortie (17), la forme d'une buse qui est constituée de telle sorte que le jet de fluide sortant est dirigé essentiellement tangentiellement à la délimitation de la voie d'écoulement principale.

2. Machine à écoulement selon la revendication n° 1, **caractérisée en ce que** la rangée d'aubes (3, 4) au niveau de laquelle est disposée la virole d'aube (2) présente des aubes qui sont reliées à la virole (2) de manière fixe.

3. Machine à écoulement selon la revendication n° 1, **caractérisée en ce que** la rangée d'aubes (3, 4) au niveau de laquelle est disposée la virole d'aube (2) présente des aubes qui sont reliées à la virole d'aube (2) de manière à pouvoir tourner autour d'un axe.

4. Machine à écoulement selon une des revendications n° 1 à n° 3, **caractérisée en ce qu'**au moins une voie d'écoulement secondaire (16) traversant la virole d'aube (2) débouche sur une surface délimitant la voie d'écoulement principale de la machine à écoulement au niveau d'un moyeu (8) ou d'un carter (1).

5. Machine à écoulement selon la revendication n° 4, **caractérisée en ce qu'**au moins une voie d'écoulement secondaire (16) traversant la virole d'aube (2) forme un passage dont l'ouverture de sortie (17) est prévue dans une zone d'alimentation IA1 qui est délimitée comme suit:
a.) une liaison rectiligne entre un point de bord d'attaque L2 et un point B éloigné du point de bord d'attaque L2 de 0,3 C_{M} en amont dans le sens méridional; C_{M} désignant la longueur méridionale d'un profil d'aube sur la paroi latérale,
b.) une liaison rectiligne entre le point B et un point A situé à 0,3 C_{M} en amont d'un point de bord d'attaque L2 dans le sens méridional,
c.) une liaison rectiligne entre le point A et un point de bord d'attaque L1,
d.) une liaison rectiligne entre le point de bord d'attaque L1 et un point C situé dans le plan du bord de fuite à une distance de 0,6 S_{O} du côté d'aspiration du profil opposé; S_{O} désignant la distance entre deux bords de fuite d'aube (6) adjacents, au niveau de la bordure de la voie d'écoulement principale,
e.) une liaison rectiligne entre le point C et un point de bord de fuite T, et
f.) un côté d'aspiration du profil SS entre le point de bord de fuite T et le point de bord d'attaque L2.

6. Machine à écoulement selon une des revendications n° 4 ou n° 5, **caractérisée en ce qu'**au moins une voie d'écoulement (16) traversant la virole d'aube (2) forme un passage dont l'ouverture de sortie (17) est prévue dans une zone d'alimentation IA2 restreinte qui est délimitée comme suit:
a.) une liaison rectiligne entre un point de bord d'attaque L2 et un point B éloigné du point de bord d'attaque L2 de 0,3 C_{M} en amont dans le sens méridional; C_{M} désignant la longueur méridionale d'un profil d'aube sur la paroi latérale,
b.) une liaison rectiligne entre le point B et un point D situé à la même coordonnée méridionale et à une distance de 0,6 S_{O} de B dans le sens circonférentiel; S_{O} désignant la distance entre deux bords de fuite d'aube (6) adjacents, au niveau de la bordure de la voie d'écoulement principale,
c.) une liaison rectiligne entre le point D et un point E disposé à 0,7 C_{M} en aval du plan du bord d'attaque et décalé de 0,4 S_{O} du côté de refoulement du profil adjacent dans le sens circonférentiel, par rapport à un point de bord de fuite T,
d.) une liaison rectiligne entre le point E et le côté d'aspiration du profil dans le sens circonférentiel,
e.) une partie du côté d'aspiration du profil dans la zone située entre le plan du bord d'attaque et un plan situé à 0,7 C_{M} en aval du plan du bord d'attaque dans le sens méridional.

7. Machine à écoulement selon une des revendications n° 1 à n° 6, **caractérisée en ce qu'**au moins une voie d'écoulement secondaire (16) traversant la virole d'aube (2) conduit à l'intérieur d'au moins une aube (3, 4) de la rangée d'aubes reliée à la virole (2), sachant que l'aube (3, 4) est pourvue d'au moins une ouverture (20) dans la surface du profil d'aube à travers laquelle du fluide s'échappe dans la voie d'écoulement principale.

8. Machine à écoulement selon une des revendications n° 1 à n° 7, **caractérisée en ce que** l'ouverture de sortie du passage (17) est en saillie dans la voie d'écoulement principale.

9. Machine à écoulement selon une des revendications n° 1 à n° 8, **caractérisée en ce que** la virole d'aube (2) présente sur son côté opposé à l'écoulement principal au moins un étage, sachant qu'un afflux du fluide, opposé au moins partiellement au sens d'écoulement principal, est prévu dans la voie d'écoulement secondaire (16).

10. Machine à écoulement selon une des revendications n° 1 à n° 9, **caractérisée en ce que** la virole d'aube (2) et la structure physique environnante (11) exécutent un mouvement relatif de rotation l'une par rapport à l'autre et qu'une cavité (10) est prévue autour de la virole (2) qui présente, aussi bien directement en amont que directement en aval de la virole (2), une ouverture annulaire respective (14) vers la voie d'écoulement principale et que des moyens (12) d'étanchéification de fuites sont prévus dans la zone de la cavité (10).

11. Machine à écoulement selon la revendication n° 10, **caractérisée en ce que** des moyens (18) pour dévier le flux de fluide secondaire sont prévus dans la zone de la cavité (10).

12. Machine à écoulement selon la revendication n° 11, **caractérisée en ce que** les moyens (18) de déviation provoquent un écoulement à travers la cavité de la virole (10) opposé essentiellement à l'écoulement principal et, qu'observés dans le sens d'écoulement principal, les moyens (12) d'étanchéification de fuites sont disposés en amont des moyens (18) de déviation.

13. Machine à écoulement selon la revendication n° 11 ou n° 12, **caractérisée en ce que** les moyens (18) de déviation du flux de fluide secondaire sont conçus sous la forme d'au moins une rangée de corps en forme d'aube.

14. Machine à écoulement selon une des revendications n° 11 à n° 13, **caractérisée en ce qu'**un moyen (18) pour dévier le flux de fluide secondaire est relié à la structure physique entourant la virole (2) et que des profils en forme d'aube prévus comme moyens (18) de déviation présentent le même signe concernant leur angle de décalage que les profils des aubes (3, 4) reliées à la virole (2) dans la voie d'écoulement principale et/ ou que ladite rangée d'aubes (3, 4) avec la virole (2) est conçue sous forme d'une rangée d'aubes de stator, que la structure physique (11) entourant la virole (2) est un tambour de rotor et que les moyens (18) de déviation sont reliés au tambour de rotor et qu'est ainsi prévu un impulseur secondaire.
